# EUROPÄISCHE PATENTSCHRIFT

(11) **EP 1 885 149 B1**
(45) Veröffentlichungstag und Bekanntmachung des Hinweises auf die Patenterteilung: **20.04.2011**
(21) Anmeldenummer: 07012436.7
(22) Anmeldetag: 26.06.2007
(51) Int. Cl.: H04W 4/16, H04W 4/02

(54) **Verfahren zur Weiterleitung eines in einem digitalen Mobilfunknetz generierten Rufes an einen Festnetz-Anschluss**
Method for relaying a call generated in a mobile wireless network to a fixed line connection
Procédé destiné à la transmission d'un appel généré dans un réseau radio mobile numérique à un raccord de réseau fixe

(30) Priorität: 31.07.2006 DE 102006035940
(43) Veröffentlichungstag der Anmeldung: 06.02.2008
(73) Patentinhaber: DB Systel GmbH, 60326 Frankfurt am Main (DE)
(72) Erfinder: Adami, Jörg, 63762 Grossostheim-Pflaumheim (DE)
(74) Vertreter: Zinken-Sommer, Rainer

(56) Entgegenhaltungen:
- EP-A- 0 783 235
- EP-A- 1 001 590
- WO-A-01/39519
- DE-A1- 10 014 692
- GB-A- 2 334 182

## Beschreibung

Die Erfindung betrifft ein Verfahren zur Weiterleitung eines in einem digitalen Mobilfunknetz generierten Rufes an einen Festnetz-Anschluss.

Die Vermittlung von Rufen aus Mobilfunknetzen an Festnetz-Anschlüsse ist seit langer Zeit gängiger Stand der Technik. Dabei wird üblicherweise die Identität des rufenden Teilnehmers an den Festnetz-Anschluss übermittelt und steht dort zum Zwecke der Rufannahme oder für sonstige Auswertungszwecke zur Verfügung. Somit ist es deshalb üblich, dass die Rufnummer des aus dem Mobilfunknetz rufenden Teilnehmers auf dem Display eines entsprechend ausgestatteten Festnetz-Endgerätes erscheint (sofern nicht bestimmte Rufnummer-Unterdrückungs-Funktionen aktiviert sind).

Es existieren jedoch auch Anwendungen, bei denen der mobile Teilnehmer den zu rufenden Festnetz-Anschluss nicht mittels einer Eingabe von dessen Zielrufnummer anwählt, sondern mittels eines Kurzwahl-Rufes aus dem mobilen Netz zu einem Festnetz-Anschluss gelangen soll. Diese Kurzwahl wird dabei in einem intelligenten Netz in eine Festnetz-Anschlussrufnummer umgesetzt. Die gerufene Stelle erkennt dann die Identität der rufenden Stelle.

Für bestimmte Anwendungsfälle kann es jedoch von Bedeutung sein, dass nicht nur die Identität des aus dem Mobilfunknetz rufenden Teilnehmers, sondern auch dessen örtliche Position zum Zeitpunkt der Ruf-Initiierung für einen Ruf-Empfänger im Festnetz bekannt ist. So ist es beispielsweise in dem von den europäischen Eisenbahnen betriebenen digitalen Mobilfunknetz wünschenswert, wenn mobile Teilnehmer (z.B. ein vor einem Signal wartender Triebfahrzeugführer) grundsätzlich zu dem für ihren aktuellen Aufenthaltsort zuständigen Festnetz-Teilnehmer (z.B. den Fahrdienstleiter, in dessen Stellbezirk sich dieses Signal befindet) gelangen.

Nach dem derzeit bekannten Stand der Technik kann dies nicht realisiert werden, da das auf der Festnetz-Seite genutzte Signalisierungsprotokoll über keinerlei Möglichkeiten verfügt, die im Mobilfunknetz verfügbare Rufinformation hinsichtlich der räumlichen Ursprungszelle eines im Mobilfunknetz generierten Rufes bereit zu stellen. Herkömmliche Lösungsansätze würden auf Modifikationen am Signalisierungsprotokoll auf der Festnetzseite abzielen, da dessen unzureichender Funktionsumfang dieses Problems verursacht. Derartige Eingriffe in das Signalisierungsprotokoll wären jedoch mit großen Aufwendungen verbunden und im Hinblick auf den eher eingeschränkten Anwendungsbereich einer solchen Funktionalität unwirtschaftlich.

Zur Lösung dieser Problematik ist aus der EP 1 001 590 A1 ein Betriebsverfahren ortsabhängiger Vermittlungsdienste in Telekommunikationsnetzen bekannt, bei dem aus einer branchenspezifischen Kurzwahlnummer in Kombination mit einer Lokalisierungsinformation, die den jeweiligen Aufenthaltsort des Anrufers bezeichnet, eine konkrete Zielrufnummer ermittelt wird. Der dieser Zielrufnummer zugeordnete Anschluss ist sowohl der vom Anrufer ausgewählten Branche als auch dem Aufenthaltsort des Anrufers zugehörig. Auf diese Weise können regional verteilte Ziele (die jeweils über eine individuelle Zielrufnummer verfügen) über eine netzweite einheitliche Rufnummer erreicht werden. Wenn beispielsweise ein in einer Mobilfunkzelle befindlicher Mobilfunkteilnehmer eine netzweit einheitliche Zielgruppen-Rufnummer für "Fahrdienstleiter" wählt, dann wird aus der Kombination dieser Zielgruppen-Rufnummer mit dem Lokalisierungsdatum des Mobilfunkteilnehmers die Adresse eines Speicherplatzes ermittelt, in der sich die zuvor (seitens eines Netzbetreibers oder eines Serviceproviders) eingetragene Rufnummer eines innerhalb dieser Lokalität gelegenen bzw. für diese Lokalität zuständigen Fahrdienstleiters befindet, welche dann im weiteren für den eigentlichen Rufaufbau verwendet wird. Allerdings ist für den gerufenen Teilnehmer nach dieser technischen Lehre das Lokalisierungsdatum (also der Ort) des rufenden Teilnehmers nicht erkennbar.

Alternativ hierzu ist aus der EP 783 235 A2 ein Verfahren zur Identifizierung des Aufenthaltsortes eines Anrufers in einem Mobilfunknetz bekannt, bei dem die Call-ID des Anrufers mittels eines Lokalisierungsdatums, die derjenigen Basisstation zugehört, an der der Anrufer mit seinem mobilen Endgerät zum Zeitpunkt des Rufaufbaus eingebucht ist, modifiziert wird. Diese Modifizierung besteht darin, einen Teil der Call-ID durch das Lokalisierungsdatum zu ersetzen bzw. die Call-ID durch sequentielles Anhängen des Lokalisierungsdatums zu ergänzen. Auf diese Weise wird der näherungsweise bestimmte Aufenthaltsort des Anrufers beispielsweise für einen vom Anrufer angesprochenen Provider ortsabhängiger Services nutzbar gemacht. Zwar kann die Lokalisierungsdate des rufenden Teilnehmers auf diese Weise für den gerufenen Teilnehmer sichtbar sein, allerdings nur unter der Bedingung, dass das festnetzseitige Signalisierungsprotokoll über Möglichkeiten verfügt, die Lokalisierungsdate als einen beim Rufempfänger auswertbaren Bestandteil der Verbindungsaufbaunachricht an diesen zu transportieren. Diese Bedingung ist in der Praxis jedoch keineswegs als "grundsätzlich erfüllt" zu betrachten.

Aus der WO 2001/039519 A1 ist ein Verfahren zur Realisierung von Leistungsmerkmalen bei Festnetzanschlüssen bekannt, bei der ein physikalisch an eine erste Vermittlungsstelle (mit eingeschränktem Umfang an Leistungsmerkmalen) zugeordneter Kommunikationsanschluss einer weiteren Kontroll-Vermittlungsstelle (mit erweitertem Umfang an Leistungsmerkmalen) als virtueller Anschluss zugeordnet wird. Auf diese Weise ist der Betrieb eines Telekommunikationsnetzes möglich, das eine Vielzahl von in der Fläche räumlich verteilten Vermittlungsstellen "ohne Intelligenz" (also mit sehr wenig Leistungsmerkmalen), an die die Kommunikationsendgeräte physikalisch angeschlossen sind, sowie eine hierzu vergleichsweise geringe Anzahl von eher zentralisierten Kontroll-Vermittlungsstellen "mit Intelligenz" (also mit vielen bzw. fortgeschrittenen Leistungsmerkmalen), an die wiederum die Vermittlungsstellen "ohne Intelligenz" über spezielle Zwischenamtsleitungen angeschlossen sind, aufweist. Die Vermittlungsstellen "ohne Intelligenz" wirken als Konzentratoren für die Kontroll-Vermittlungsstellen "mit Intelligenz". Dem virtuellen Kommunikationsanschluss werden die durch die weitere Kontroll-Vermittlungsstelle bereitgestellten Leistungsmerkmale zugeteilt. In einem für den virtuellen Kommunikationsanschluss vorgesehenen Datensatz sind in der Kontroll-Vermittlungsstelle Adressierungsinformationen gespeichert, durch welche eine Nutzkanalverbindung über die Zwischenamtsleitung zum realen Kommunikationsanschluss aufgebaut werden kann.

Der Erfindung liegt auf dieser Basis die Aufgabe zugrunde, ein hierzu alternatives Verfahren zur Weiterleitung eines in einem digitalen Mobilfunknetz generierten Rufes an einen Festnetz-Anschluss bereitzustellen, welches es auf einfache und wirtschaftliche Weise ermöglicht, den Ursprungsort eines in einem Mobilfunknetz generierten Rufes im Festnetz beim Ruf-Empfänger verfügbar zu machen, wenn das festnetzseitige Signalisierungsprotokoll nicht dazu ausgelegt ist, das Lokalisierungsdatum des Rufenden als einen beim Rufempfänger auswertbaren Bestandteil der Verbindungsaufbaunachricht an diesen zu transportieren.

Erfindungsgemäß wird diese Aufgabe in Verbindung mit dem Oberbegriff des Patentanspruches 1 dadurch gelöst, dass dieser aus dem Mobilfunknetz eingehende Ruf an einen vordefinierbaren und in der Vermittlungsstelle des Festnetzes (VST) eingerichteten virtuellen Anschluss (VSUB1, VSUB2, VSUB3) weitergeleitet wird, wobei jeder virtuelle Anschluss eindeutig einer Zelle des Mobilfunknetzes zugeordnet ist.

Bei einem solchen erfindungsgemäßen virtuellen Anschluss handelt es sich um einen internen Anschluss innerhalb der Festnetz-Vermittlungsanlage, der nicht auf einen physikalisch existierenden Festnetz-Anschluss gerichtet ist, sondern auf einen virtuellen Teilnehmer dieser Vermittlungsstelle verweist, dem keine Anschlussleitung bzw. keine Anschlussbaugruppen zugeordnet sind. Dieser virtuelle Teilnehmer verfügt jedoch dennoch über die volle Funktionalität und kann somit auch den Rufumleitungsdienst nutzen. Die Ortsinformation, innerhalb welcher Mobilfunkzelle der Ruf im Mobilfunknetz generiert wurde (mobile originated call = MOC) findet sich nunmehr in der an den Ruf-Empfänger im Festnetz übertragenen Absender-Kennung des virtuellen Anschlusses wieder. Bei der Rufweiterleitung vom virtuellen Anschluss zum realen Anschluss des Festnetzes wird nunmehr die Identität des virtuellen Anschlusses in einem speziell für die Rufumleitung vorgesehenen Feld in der Verbindungsaufbaunachricht transportiert. Auf diese Weise kann aus der in der Rufaufbaunachricht enthaltenen Information über die Identität des virtuellen Anschlusses auf die Ursprungszellinformation hinsichtlich des räumlichen Ursprungs des MOC geschlossen werden. Diese Information kann für eine automatisierte Weiterbehandlung des Rufes (z.B. im Rahmen der ortsabhängigen Adressierung) herangezogen werden.

Es ist in diesem Zusammenhang zweckmäßig, die Identität der Ursprungszelle (dies umfasst sowohl die eindeutige Netzwerk-Kennung als auch die Zell-Identität) des MOC in besonders einfach zu decodierender Weise in die Rufnummer des virtuellen Anschlusses zu integrieren. Dies erleichtert und beschleunigt die Weiterverarbeitung. Beispielsweise könnte die Identität der Ursprungszelle in einer mnemotechnisch leicht zu erfassenden Codierung - eventuell sogar als Klartext - erfasst werden.

Die Erfindung sieht ferner vor, dass bei der Generierung der Zielrufnummer im Intelligenten Netzwerk-System (IN) mittels einer Datenbankabfrage die der Ursprungszelle (C1, C2, C3) des aus dem Mobilfunknetz eingehenden Rufes eindeutig zugeordnete Zielrufnummer ermittelt wird. Diese Zuordnung muss bezogen auf den Zuständigkeitsbereich einer Festnetz-Vermittlungsstelle eindeutig sein.

Gemäss einer zweckmäßigen Ausgestaltung der Erfindung wird die in der Rufweiterleitung des in der Festnetz-Vermittlungsstelle (VST) eingerichteten virtuellen Anschlusses (VSUB1, VSUB2, VSUB3) enthaltene Ziel-Rufnummer (SUB) mittels an sich bekannter Verfahren des Fernzugriffes konfiguriert. Auf diese Weise können starre, d.h. nicht-rufabhängige Zuordnungen zwischen den virtuellen Anschlüssen in der Vermittlungsstelle und den realen Festnetz-Anschlussnummern einfach und unkompliziert geändert und aktualisiert werden.

Der Erfindungsgedanke wird in nachfolgender Figur verdeutlicht. Es zeigt:

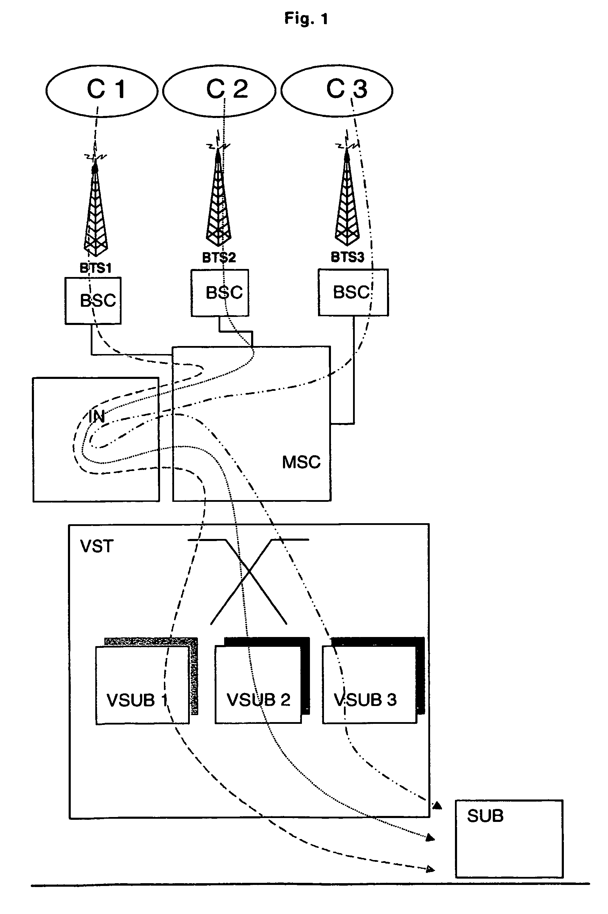

- **Figur 1**: Prinzip-Schemabild des erfindungsgemäßen Verfahrens

Der zur beispielhaften Erläuterung der Erfindung gedachte Anwendungsfall sieht 3 Triebfahrzeuge vor, wobei sich das erste Triebfahrzeug in einer Funkzelle C1 vor dem Einfahrsignal A1 nach A-Stadt, das zweite Triebfahrzeug in einer Funkzelle C2 vor einem aus anderer Richtung zulaufenden Einfahrsignal A2 von A-Stadt befindet. Die Fahrzeugführer beider Triebfahrzeuge wollen jeweils unabhängig voneinander den zuständigen Fahrdienstleiter des Stellbezirkes "A-Stadt" rufen. Dieser Fahrdienstleiter verfügt über einen Teilnehmer-Anschluss im Festnetz (SUB), während sich die Fahrzeugführer beider Triebfahrzeuge eines Mobilfunkendgerätes bedienen. Bei Anwendung des bisher bekannten Standes der Technik musste jeder Fahrzeugführer wissen, welcher Fahrdienstleiter räumlich zuständig ist, und diesen sodann gezielt anrufen (z.B. durch Wählen von dessen Telefonnummer oder durch Auswahl einer entsprechenden Kurzwahl). Sollte der Fahrzeugführer versehentlich eine falsche Ziel-Rufnummer wählen (z.B. den für B-Dorf zuständigen Fahrdienstleiter), so konnte dieses Missverständnis bislang nur im Rahmen der im Gespräch übermittelten Gesprächsinhalte geklärt werden. Das auf der Festnetz-Seite genutzte Signalisierungsprotokoll EDSS1 verfügt über keinerlei Möglichkeiten, die im Mobilfunknetz verfügbare Rufinformation bezüglich der räumlichen Ursprungszelle eines MOC bereit zu stellen. Dies führt immer wieder dazu, dass Kommunikationskanäle unnötig blockiert werden und der für Kommunikationszwecke anzusetzende Zeitaufwand zu hoch ausfällt. Eine technische Möglichkeit zur Vermeidung von derartigen fehlgeleiteten Gesprächswünschen fehlt.

Unter Anwendung des erfinderischen Gedankens ist es nunmehr ausreichend, wenn jeder der beiden Fahrzeugführer die für den Fahrdienstleiter vorgesehene Kurzwahl "Fdl" aktiviert. Aufgrund der eindeutigen Orts-Identität der Ursprungszelle eines solchen im Mobilfunknetz ausgelösten Rufes (mobile originated call = MOC) wird der vom ersten Fahrzeugführer abgesetzte Ruf im intelligenten Netz (IN) einem eindeutigen virtuellen Anschluss VSUB1 zugeordnet. Der vom zweiten Fahrzeugführer abgesetzte Ruf wird hingegen dem virtuellen Anschluss VSUB2 zugeordnet. Die Mobilfunk-Rufe beider Fahrzeugführer erreichen in der Festnetz-Vermittlungsstelle diese virtuellen Anschlüsse VSUB1 bzw. VSUB2, in denen jeweils eine feste Rufweiterleitung auf den festnetzseitigen Teilnehmer-Anschluss (SUB) des für "A-Stadt" zuständigen Fahrdienstleiters programmiert ist. Der gerufene Teilnehmer-Anschluss "Fahrdienstleiter A-Stadt" erkennt die Identitäten VSUB1 und VSUB2 der rufenden virtuellen Anschlüsse und kann daraus die Information ableiten, dass sich die aus dem Mobilfunk rufenden Teilnehmer in den Funkzellen C1 bzw. C2 des Mobilfunknetzes befinden. In Verbindung mit weiteren eventuell vorliegenden betrieblichen Informationen (z.B. über das Vorliegen einer betrieblichen Störung im Bereich des Einfahrsignales A2) kann der Fahrdienstleiter eine Entscheidung über die bevorzugte Entgegennahme des aus der Zelle C2 stammenden Rufes treffen.

Mittels entsprechend konfigurierter Auswertungsschaltungen kann zudem realisiert werden, dass Rufe aus Funkzellen, die als "nicht zuständig" eingestuft sind (beispielsweise mittels einer Positiv- oder Negativliste), vom realen Teilnehmer-Anschluss (SUB) gar nicht erst angenommen, sondern mangels örtlicher Zuständigkeit abgewiesen werden. Bezogen auf das Anwendungsbeispiel könnte dies für den Fahrzeugführer eines dritten Triebfahrzeuges zutreffen, der in Funkzelle C3 vor dem Einfahrsignal des Bahnhofes von B-Dorf zum Halten gekommen ist und den für "B-Dorf" zuständigen Fahrdienstleiter kontaktieren möchte. Sollte dieser Fahrzeugführer nun versehentlich den Teilnehmer-Anschluss (SUB) des für "A-Stadt" zuständigen Fahrdienstleiters gewählt haben, so würde dieser Ruf dem virtuellen Anschluss VSUB3 zugeordnet. Der Teilnehmer-Anschluss SUB könnte die Ortsinformation "Zelle 3" des Mobilfunknetzes aus der Verbindungsaufbaunachricht entnehmen und den Ruf mangels Zuständigkeit ohne Rufannahme abweisen.

Für den Fall, dass innerhalb einer Funkzelle verschiedene Zuständigkeiten vorliegen (also beispielsweise: der Fahrdienstleiter "A-Stadt" ist für ein erstes Gleis zuständig, für ein zweites benachbartes Gleis hingegen ist der Fahrdienstleiter "B-Dorf" zuständig), so wird dies zweckmäßigerweise durch Anwendung verschiedener Shortcodes bzw. Kurzwahlen unterschieden.

### Bezugszeichenliste:

- MSC: mobile Vermittlungsstelle
- IN: intelligentes Netzwerk-System
- C1: erste räumliche Zelle eines Mobilfunksystems
- C2: zweite räumliche Zelle eines Mobilfunksystems
- C3: dritte räumliche Zelle eines Mobilfunksystems
- BS: Basis-Station
- BSC: Controller der Basis-Stationen
- VST: Vermittlungsstelle des Festnetzes
- VSUB1: virtueller Anschluss für aus C1 an SUB gerichtete Rufe
- VSUB2: virtueller Anschluss für aus C2 an SUB gerichtete Rufe
- VSUB3: virtueller Anschluss für aus C3 an SUB gerichtete Rufe
- SUB: realer Teilnehmer-Anschluss im Festnetz

## Patentansprüche

1. Verfahren zur Weiterleitung eines in einem digitalen Mobilfunknetz generierten Rufes an einen Festnetz-Anschluss, wobei in einem einer Vermittlungsstelle des Mobilfunknetzes zugeordneten Intelligenten Netzwerk-System basierend auf einer aus einer Verbindungsaufbau-Nachricht des aus dem Mobilfunknetz eingehenden Rufes gewonnenen Orts-Information eine von dieser Orts-Information abhängige Zielrufnummer generiert wird, **dadurch gekennzeichnet, dass** mittels der Zielrufnummer dieser aus dem Mobilfunknetz eingehende Ruf an einen in einer Vermittlungsstelle des Festnetzes eingerichteten virtuellen Anschluss weitergeleitet wird, wobei dieser virtuelle Anschluss eine Rufweiterleitung auf eine reale Anschlussnummer des Festnetzes aufweist, wobei
dieser aus dem Mobilfunknetz eingehende Ruf an einen vordefinierbaren und in der Vermittlungsstelle des Festnetzes (VST) eingerichteten virtuellen Anschluss (VSUB1, VSUB2, VSUB3) weitergeleitet wird, wobei jeder virtuelle Anschluss eindeutig einer Zelle des Mobilfunknetzes zugeordnet ist.

2. Verfahren zur Weiterleitung eines in einem digitalen Mobilfunknetz generierten Rufes an einen Festnetz-Anschluss nach Anspruch 1, **dadurch gekennzeichnet, dass** bei der Generierung der Zielrufnummer im Intelligenten Netzwerk-System (IN) mittels einer Datenbankabfrage die der Ursprungszelle (C1, C2, C3) des aus dem Mobilfunknetz eingehenden Rufes eindeutig zugeordnete Zielrufnummer ermittelt wird.

3. Verfahren zur Weiterleitung eines in einem digitalen Mobilfunknetz generierten Rufes an einen Festnetz-Anschluss nach Anspruch 1 oder 2, **dadurch gekennzeichnet, dass** die in der Rufweiterleitung des in der Festnetz-Vermittlungsstelle (VST) eingerichteten virtuellen Anschlusses (VSUB1, VSUB2, VSUB3) enthaltene Ziel-Rufnummer (SUB) mittels an sich bekannter Verfahren des Fernzugriffes konfiguriert wird.

## Claims

1. A method for redirecting a call generated in a mobile telephone network to a fixed-line network connection, wherein in an intelligent network system assigned to a switching centre of the mobile telephone network based on a local information gained from a connection establishment message of the incoming call from the mobile telephone network a target call number dependent on this local information is generated, **characterized in that** by means of the target call number this incoming call from the mobile telephone network is redirected to a virtual connection established in a switching centre of the fixed-line network, wherein this virtual connection comprises a call redirection to a real connection number of the fixed-line network, wherein this incoming call from the mobile telephone network is redirected to a predefinable virtual connection (VSUB1, VSUB2, VSUB3) established in the switching centre of the fixed-line network (VST), wherein each virtual connection is unambiguously assigned a cell of the mobile telephone network.

2. The method for redirecting a call generated in a digital mobile telephone network to a fixed-line network connection according to Claim 1, **characterized in that** upon generating the target call number in the intelligent network system (IN) by means of a data base query the target call number unambiguously assigned to the original cell (C1, C2, C3) of the incoming call from the mobile telephone network is determined.

3. The method for redirecting a call generated in a digital mobile telephone network to a fixed-line network connection according to Claim 1 or 2, **characterized in that** the target call number (SUB) contained in the call redirection of the virtual connection (VSUB1, VSUB2, VSUB3) established in the fixed-line network switching centre (VST) is configured by means of methods of the remote access known per se.

## Revendications

1. Procédé de retransmission d'un appel généré dans un réseau radio-mobile numérique à une liaison de réseau fixe, dans lequel, dans un système de réseau intelligent associé à un point de transmission du réseau radio-mobile, en se basant sur une information de localisation reçue dans un message d'établissement de liaison de l'appel entrant en provenance du réseau radio-mobile, un numéro d'appel de destination dépendant de cette information de localisation est généré, **caractérisé en ce que**, au moyen du numéro d'appel de destination, cet appel entrant en provenance du réseau radio-mobile est retransmis à une liaison virtuelle mise en place à un point de transmission du réseau fixe, cette liaison virtuelle présentant une retransmission d'appel vers un numéro de liaison réel du réseau fixe, cet appel entrant en provenance du réseau radio-mobile étant retransmis à une liaison virtuelle (VSUB1, VSUB2, VSUB3) prédéfinissable et mise en place au point de transmission du réseau fixe (VST), chaque liaison virtuelle étant clairement associée à une cellule du réseau radio-mobile.

2. Procédé de retransmission d'un appel généré dans un réseau radio-mobile numérique à une liaison de réseau fixe selon la revendication 1, **caractérisé en ce que**, lors de la génération du numéro d'appel de destination dans le système de réseau intelligent (IN), le numéro d'appel de destination attribué à la cellule d'origine (C1, C2, C3) de l'appel entrant en provenance du réseau radio-mobile est déterminé au moyen d'une consultation de banque de données.

3. Procédé de retransmission d'un appel généré dans un réseau radio-mobile numérique à une liaison de réseau fixe selon la revendication 1 ou 2, **caractérisé en ce que** le numéro d'appel de destination (SUB) contenu dans la retransmission d'appel de la liaison virtuelle (VSUB1, VSUB2, VSUB3) mise en place au point de transmission du réseau fixe (VST) est configuré au moyen de procédés connus en soi d'intervention à distance.
